# EUROPEAN PATENT APPLICATION

(11) **EP 1 420 587 A1**
(43) Date of publication of application: **19.05.2004**
(21) Application number: 02025249.0
(22) Date of filing: 12.11.2002
(51) Int. Cl.: H04N 7/10

(54) **Circuit arrangement with two input sections for receiving television program content**

(71) Applicant: Thomson Broadband UK Ltd, Llantrisant, Mid Glamorgan CF72 8LF (GB)
(72) Inventor: Harman, Paul 20 Clos Cae Pwll Bwl Road, CF46 Glamorgan (GB)
(74) Representative: Rossmanith, Manfred, Dr.

(57) **Abstract**

The circuit arrangement according to the invention comprises two input sections for receiving television content, for example comprises two tuners, or a tuner and a DVD player or a hard disk as an input section for receiving television content. It comprises further two output sections for transmission of television content, and is therefore able to provide the same television program or two different television programs to two different locations. The second output is particularly a modulated RF output, via which a remote second television set (8) can be provided with a television program, for example in the bedroom or in a children's room. The circuit arrangement is arranged in particular within a set-top box (3) for receiving television broadcast content. The television set (8) may be coupled via a RF cable (10) to the set-top box 3 or via a wireless RF radio connection.

## Description

### Background

For receiving television programs, more and more so-called set-top boxes are used, which are arranged together with a television set and a video recorder, and which allow a user, to receive and decode analogue or digital television programs, supplied via cable (CATV), via satellite or via terrestrial reception. Often a set-top box is also used together with a smart card for decoding scrambled television channels (Pay TV).

The set-top box comprises therefore a tuner, which receives a plurality of television programs within a large frequency band from a broadband source, and which downconverts a television program into a baseband frequency range, and/or descrambles and decodes this television program, which can be used then by a connected television set. The set-top box has therefore an output section, for example with a SCART output, to which the television set is connected, and usually a second output section, to which a digital or analog video recorder can be coupled. For selecting a respective television program, the set-top box comprises a remote control unit, for example an infrared receiver, via which a user is able to control the set-top box via a remote control hand set.

A broadcast digital television signal receiver for receiving a digital television signal representing both image data and information data is known from WO-A-9723997. The receiver responds to user operation by a control device for varying an interactive image and establishes a telecommunications link to a remote site for online interaction between the user and that site. From WO-A-9637996 a system with a satellite decoder, a television set and other units is known, which has a remote controller that selects source modes and coordinates units to operate together in a selected mode.

The known set-top boxes have the disadvantage, that it is not possible to view a certain program with a TV and record a different TV program with a video recorder, or do not allow to use a second television set being connected to the set-top box.

### Invention

The object of the present invention is therefore, to provide a circuit arrangement, especially a set-top box, which provides an improved flexibility for a user.

This object is achieved for a circuit arrangement as specified in claim 1. Advantageous developments of the invention are specified in the subclaims.

The circuit arrangement according to the invention comprises two input sections for receiving television content, for example comprises two tuners, or a tuner and a DVD player or a hard disk as an input section providing television content. It comprises further two output sections for transmission of television content, and is therefore able to provide the same television program or two different television programs to two different locations. The second output is in particular a modulated RF output, via which a remote second television set can be provided via a RF cable with a television program, for example in the bedroom or in a children's room. The RF cable has the advantage that the transmission losses are low also for large distances. A wireless RF radio connection may be used also.

In a preferred embodiment, the second output section comprises in parallel to the modulated RF output an input for receiving remote control signals via the RF cable from the remote television set, therefore allowing to select remotely a television program, which is different from the television program, as provided to the first television set.

### Drawings

Preferred embodiments of the invention are now explained in more detail with reference to a schematic drawing, which show:
- Fig.: A digital receiver/decoder with a first television set, a video recorder and a remotely connected second television set.

### Preferred Embodiments of the Invention

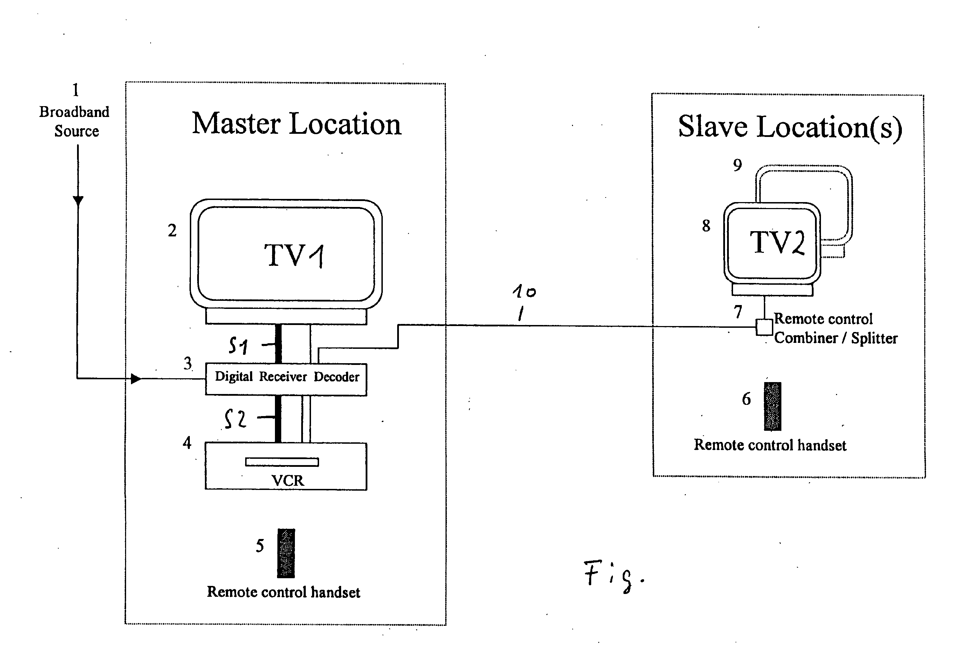

In the figure a digital receiver/decoder, a so-called set-top box 3 receives television program content from a broadband source 1, which can be one or more of the possible sources DVB-T, DVB-S or DVB-C (Digital Video Broadcast Terrestrial, Satellite or Cable). The set-top box 3 has either a dual tuner; this could be either two of the same, for example two tuners for DVB-T, or a combination of broadband sources, e.g. DVB-T and DVB-S. The set-top box 3 comprises at least two output sections, and in particular an output section with a modulated RF output, via which a second television set 8 is provided with a television program. The television set 8 may be coupled via a RF cable 10 to the set-top box 3, or may be coupled via a wireless RF radio connection. The television set 8 can be located therefore in a remote location, for example in the bedroom or in a children's room.

In an alternative embodiment, the set-top box 3 comprises a DVB-T, DVB-S or a DVB-C tuner and a DVD player in combination. The set-top box 3 is arranged in a "Master" location and connected in a conventional way: via a SCART cable S1 to a television set 2, TV1, and via a SCART cable S2 to an analogue or digital video recorder, VCR, 4. The video recorder 4 is connected to the television set 2 via a RF connection. A remote control unit 5 controls the set-top box 3 and allows a user to switch between the DVB source and the DVD player.

In this embodiment a television set 8 remotely located is operated as a "Slave" location. The television set 8, TV2, is being connected via a second RF cable or via a wireless RF radio connection to the set-top box 3 and has no control over the program content. It will switch the television program following the control from the master location, as selected for example by the remote control unit 5.

In a preferred embodiment, a user in the Master location can switch the output section of the set-top box 3 with the SCART connection for the television set 2 to be different to that going to the VCR SCART output of the set-top box 3. This will enable an operation mode of the set-top box 3 of "watch one, record another". Since the RF modulator for the television set 8 here always follows the VCR SCART output, the slave location, television set 8, will be able to view program content different to that on the master television set 2.

In this mode, the master location can mute in addition the audio and video content to the RF modulator output while maintaining the content on the VCR SCART output. This is to enable recording while preventing the content being viewed at the slave location, for a parental control. Furthermore, with the correct signaling in the television source material from broadband source 1, it is possible to auto parental control television program content to the slave location.

In a further embodiment, the functionality is the same as for the preceding preferred embodiment, but with the added capability of remotely controlling the content for the television set 8 at the slave location via an IR (InfraRed) remote control unit/receiver module 7. The remote control unit 7 is for example a separate module 7, which is powered by a DC voltage from the set-top box 3. The remote control unit 7 receives remote control commands from a remote control handset 6 and modulates them onto a carrier, which is then sent back down the RF cable 10 to the set-top box 3.

If a timer event for the video recorder 4 occurs, the set-top box 3 forces a mode change back to the mode of the preceding embodiment for the duration of the timer event. Then a user at the slave location may decide to and control the same program content to that being viewed in the master location, but again the master location can over-ride the slave location and revert the slave television set 8 back to the mode of the preceding embodiment for an auto parental control.

## Claims

1. Circuit arrangement (3) comprising two input sections for receiving television program content, two output sections for transmission of television content, and a remote control unit (5) for selecting television content, one of said output sections comprising a modulated RF output for a second television set (8).

2. Circuit arrangement according to claim 1, **characterized in that** both outputs provide the same program content in dependence of the remote control unit (5).

3. Circuit arrangement according to claim 1, **characterized in that** the two output sections provide different program content in dependence of the remote control unit (5).

4. Circuit arrangement according to claim 3, **characterized in that** the circuit arrangement (3) comprises a first output section for a television set (2), a second output section for a video recorder (4), and a third output section with the modulated RF output for the second television set (8), and that the third output section provides the same television content as the first or the second output section, for a auto-parental control.

5. Circuit arrangement according to claim 4, **characterized in that** the third output section is switchable on and off with the remote control unit (5).

6. Circuit arrangement according to one of the claims 1-3, **characterized in that** the circuit arrangement (3) comprises a first output section for a television set (2), a second output section for a video recorder (4), and a third output section with the modulated RF output for the second television set (8), the program content of the third output section being remotely controllable by a second remote control unit (6, 7) from the location of the second television set (8).

7. Circuit arrangement according to claim 6, **characterized in that** the second remote control unit (6, 7) is disabled by the circuit arrangement (3) in case a timer event of the video recorder (4) occurs, or is switchable on and off by the remote control unit (5) of the circuit arrangement (3).

8. Circuit arrangement according to one of the preceding claims, **characterized in that** the first input section comprises a television tuner and the second input section comprises a digital video (DVD) player.

9. Circuit arrangement according to one of the preceding claims 1 - 7, **characterized in that** the two input sections comprise each a television tuner, for example each a DVB-T tuner, or a DVB-T tuner and a Satellite-tuner.

10. Circuit arrangement according to claim 8 or 9, **characterized in that** the circuit arrangement is arranged within a set-top box for receiving television broadcast content.
